# EUROPÄISCHE PATENTSCHRIFT

(11) **EP 2 133 247 B1**
(45) Veröffentlichungstag und Bekanntmachung des Hinweises auf die Patenterteilung: **10.10.2012**
(21) Anmeldenummer: 09007417.0
(22) Anmeldetag: 04.06.2009
(51) Int. Cl.: B60T 13/26, B60T 13/38, B60T 13/66

(54) **Parkbremsventilanordnung**
Parking brake valve assembly
Agencement de soupape de freinage de stationnement

(30) Priorität: 11.06.2008 DE 102008027732
(43) Veröffentlichungstag der Anmeldung: 16.12.2009
(73) Patentinhaber: KNORR-BREMSE Systeme für Nutzfahrzeuge GmbH, 80809 München (DE)
(72) Erfinder: Kaupert, Oliver, 80995 München (DE)
(74) Vertreter: Schönmann, Kurt

(56) Entgegenhaltungen:
- EP-A1- 1 785 325
- DE-A1- 4 037 462
- DE-A1-102008 015 249

## Beschreibung

Die Erfindung betrifft eine elektrisch gesteuerte Parkbremsventilanordnung für ein Bremssystem eines Nutzfahrzeuges, wobei die Parkbremsventilanordnung zwei Anschlüsse aufweist, von denen ein Anschluss dazu vorgesehen ist, eine Anhängersteuerventilanordnung so mit Druck zu beaufschlagen, dass der Anhänger im Parkbremsbetrieb des Nutzfahrzeugs mitbremst, während der andere Anschluss dazu vorgesehen ist, die Anhängersteuerventilanordnung so mit Druck zu beaufschlagen, dass der Anhänger im Parkbremsbetrieb des Nutzfahrzeugs nicht mitbremst.

Nutzfahrzeugbremsanlagen umfassen ein Betriebsbremssystem und ein Parkbremssystem, die zumeist unabhängig voneinander pneumatisch oder elektropneumatisch gesteuert werden. Parkbremssysteme umfassen zumeist Federspeicherzylinder, die in ihrem entlüfteten Zustand das Fahrzeug bremsen, während die Parkbremse durch Belüften der Federspeicherzylinder gelöst werden kann.

Die Parkbremsen eines mit einem Nutzfahrzeug verbundenen Anhängers werden über eine Anhängersteuerventilanordnung betätigt, das pneumatisch mit einer Parkbremsventilanordnung des Nutzfahrzeugs verbunden werden kann. Dabei gibt es Nutzfahrzeug-Hersteller, die ein Zugfahrzeug mit Anhänger so in Parkstellung versetzen, dass der Anhänger mitbremst, während andere Nutzfahrzeug-Hersteller ein Nutzfahrzeug mit Anhänger so in Parkstellung versetzen, dass der Anhänger nicht mitbremst.

Es sind bereits elektronisch kontrollierte Parkbremsventilanordnungen für Nutzfahrzeuge mit Anhänger bekannt, die zwei pneumatische Energieabflüsse zu einer Anhängersteuerventilanordnung vor, wobei einer die Variante bedient, bei der der Anhänger in Parkstellung bremst, und einer die Variante, bei der der Anhänger in Parkstellung nicht bremst. Der jeweils nicht benötigte Anschluss muss verschlossen werden. Jedoch sind bekannte Lösungen immer mit einem nicht unerheblichen Material- und Kostenaufwand verbunden. Es sind viele Ventile erforderlich, insbesondere Magnetventile, deren Herstellung aufgrund des erforderlichen präzisen Schaltverhaltens vergleichsweise teuer ist und die aufgrund der Belastung der beweglichen Bestandteile Verschleiß unterworfen sind.

Aus der EP 1 785 325 A1 ist ein Steuergerät für eine Feststellbremse und eine Anhängerbremse einer Druckluftbremsanlage eines Kraftfahrzeugs bekannt. Das Steuergerät ist mit einem Eingangsanschluss für Steuersignale, einem Eingangsanschluss für eine Druckluftversorgung, einem zu einem Anhängersteuerventil führenden Ausgangsanschluss und einem zu Federspeicherbremszylindern des Kraftfahrzeugs führenden Ausgangsanschluss versehen. In einem Gehäuse sind mindestens zwei von einer Steuerelektronik schaltbare Magnetventile zum gemeinsamen Be- und Entlüften der beiden Ausgangsanschlüsse und ein Schaltventil vorgesehen. Das Schaltventil verbindet in einer Stellung die beiden Ausgangsanschlüsse miteinander und belüftet in der anderen Stellung den zu dem Anhängersteuerventil führenden Ausgangsanschluss, während der zu den Federspeicherbremszylindern führende Ausgangsanschluss über die beiden Magnetventile be- und entlüftbar bleibt.

Der Erfindung liegt daher die **Aufgabe** zugrunde, eine elektrisch kontrollierte Parkbremsventilanordnung derart weiterzubilden, dass die Betriebsarten "Anhänger bremst in Parkstellung mit" und "Anhänger bremst in Parkstellung nicht mit" in einer elektropneumatischen Schaltung in kostengünstiger und wenig störanfälliger Weise realisiert werden.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die Erfindung baut auf dem gattungsgemäßen Stand der Technik dadurch auf, dass die elektrisch gesteuerte Parkbremsventilanordnung höchstens zwei Magnetventile umfasst, insbesondere ein erstes Magnetventil und ein zweites Magnetventil. Auf diese Weise ist die Parkbremsventilanordnung auf ein Mindestmaß an kostenintensivem und mechanischem Verschleiß unterworfenen Schaltelementen beschränkt. Da jedes elektrisch zu schaltende Ventil auch einen zusätzlichen Stromverbraucher darstellt, wird so auch der Energieverbrauch und letztlich der Spritverbrauch des Nutzfahrzeuges gesenkt.

Eine pneumatische Verrohrung ins Fahrerhaus des Nutzfahrzeugs, um die Parkbremsventilanordnung zu bedienen, wird nicht benötigt, da es sich um ein elektrisch gesteuertes System handelt.

Nützlicherweise ist vorgesehen, dass bei einem Ausbleiben einer Ansteuerung der Magnetventile die Parkbremsventilanordung im zuletzt eingestellten Betriebszustand verbleibt. Dadurch wird sichergestellt, dass bei einem Ausbleiben von Signalen zur Ansteuerung der Magnetventile, zum Beispiel bei einem Ausfall der Spannungsversorgung, kein sicherheitskritischer Betriebszustand des Fahrzeugs hervorgerufen wird. Stattdessen werden die jeweils gerade aktuellen Druckverhältnisse an den Anschlüssen zur Anhängersteuerventilanordnung und am Steuereingang des Relaisventils, das den Druck auf die Federspeicher-Parkbremse des Nutzfahrzeugs reguliert, beibehalten. Zum Beispiel wird auch bei Ausfall der Spannungsversorgung die Parkbremse des Zugfahrzeugs oder des Anhängers nicht sperren, wenn ein Fahrzustand vorliegt. Entsprechend werden die Parkbremsen nicht freigegeben, wenn keine Spannungsversorgung vorhanden ist. Das heißt, ein Fahrzeug, bei dem durch einen Fehler die Spannungsversorgung nicht gewährleistet ist, kann auch nicht wegfahren.

In besonders nützlicher Weise ist vorgesehen, dass ohne Ansteuerung des ersten Magnetventils nicht in einen Fahrbetriebszustand gewechselt werden kann. So kann sichergestellt werden, dass mit dem Fahrzeug nicht gefahren werden kann, bevor nicht aktiv, in der Regel durch eine elektronische Steuereinheit, das richtige Schaltsignal an das richtige Ventil gegeben wurde. Dies erhöht die Sicherheit, da dies ein korrektes Funktionieren des Signalgebers, in der Regel der elektronischen Steuereinheit, voraussetzt. Auch sind so beispielsweise auf Diebstahl des Fahrzeugs gerichtete Manipulationen der eingelegten Parkbremse von außen erschwert.

Gemäß einer bevorzugten Ausführungsform einer erfindungsgemäßen Parkbremsventilanordnung kann vorgesehen sein, dass sie ein Relaisventil zum Ansteuern der Parkbremsen des Nutzfahrzeugs umfasst, wobei ein Steuereingang des Relaisventils mit einem Ausgang des ersten Magnetventils verbunden ist und ein Eingang des ersten Magnetventils über eine erste Steuerleitung mit dem zweiten Anschluss und einem Ausgang des zweiten Magnetventils verbunden ist, über das die erste Steuerleitung mit einem Druck beaufschlagt werden kann. Auf diese Weise kann eine Anordnung von Ventilen realisiert werden, die es erlaubt, für den Betriebszustand "Fahren" sowohl den zweiten Anschluss zur Anhängersteuerventilanordnung, als auch die Parkbremsen des Zugfahrzeuges mit einem Druck zu beaufschlagen. In einem Zustand "Parken" ist es so möglich, die erste Steuerleitung nicht von der Druckluftversorgung zu trennen und den Steuereingang des Relaisventils durch das erste Magnetventil von der ersten Steuerleitung zu trennen, falls ein Parkzustand, in dem der zweite Anschluss, aber nicht der Steuereingang des Relaisventils mit einem Druck beaufschlagt werden, eingestellt werden soll, so dass die Bremse des Anhängers geöffnet ist, ohne dass die Bremse des Zugfahrzeugs gelöst wird.

Nützlicherweise ist vorgesehen, dass die erste Steuerleitung über das zweite Magnetventil entlüftet werden kann. So kann mit einem einzelnen Magnetventil geregelt werden, ob die Steuerleitung mit Druckluft versorgt oder entlüftet wird.

Eine bevorzugte Ausführungsform einer erfindungsgemäßen Parkbremsventilanordnung sieht vor, dass der Steuereingang des Relaisventils über ein erstes Rückschlagventil und eine zweite Steuerleitung mit dem ersten Anschluss verbunden ist. Auf diese Weise wird immer dann, wenn der Steuereingang des Relaisventils mit einem Druck beaufschlagt wird, so dass dieses die Federspeicher-Parkbremse des Nutzfahrzeugs in einen Fahrzustand versetzt, auch der erste Anschluss zur Anhängersteuerventilanordnung mit einem Druck beaufschlagt, so dass auch ein damit verbundener Anhänger in einen Fahrzustand versetzt wird. Aufgrund des ersten Rückschlagventils wird nun aber ein Entlüften der zweiten Steuerleitung entkoppelt vom Entlüften des Steuereingangs des Relaisventils, so dass das Nutzfahrzeug gebremst werden kann, ohne auch einen mit dem ersten Anschluss verbundenen Anhänger, der in Parkstellung gebremst ist, bremsen zu müssen.

Besonders bevorzugt ist die Ausführungsform dadurch weitergebildet, dass die zweite Steuerleitung über ein zweites Rückschlagventil mit der ersten Steuerleitung verbunden ist. So kann bei entlüfteter erster Steuerleitung die zweite Steuerleitung über das zweite Rückschlagventil entlüftet werden. Umgekehrt muss aber bei Belüftung der ersten Steuerleitung nicht auch die zweite Steuerleitung belüftet werden.

Nützlicherweise ist vorgesehen, dass das erste Magnetventil ein bistabiles 3/2-Wege-Ventil ist. Auf diese Weise wird es ermöglicht, den Steuereingang des Relaisventils separat auch bei belüfteter erster Steuerleitung zum zweiten Anschluss zur Anhängersteuerventilanordnung zu entlüften. Dies ermöglicht ein Ansteuern der Parkbremse des Nutzfahrzeugs, ohne gleichzeitig mit dem zweiten Anschluss verbundenen Anhänger bremsen zu müssen. Im Gegensatz zu monostabilen Ventilen behalten bistabile Ventile ihren Schaltzustand auch bei Wegfall des Steuersignals bei und werden erst von einem weiteren Steuersignal in einen anderen Zustand geschaltet. Hierdurch wird beispielsweise ermöglicht, dass das erste Magnetventil bei einem Ausfall der Spannungsversorgung in einem Fahrbetriebszustand, bei dem das erste Magnetventil den Steueringang des Relaisventils nicht mit der Entlüftung verbindet, so dass der Fahrbetriebszustand erhalten bleibt. In einem Parkbetriebszustand kann so verhindert werden, dass ohne aktives Ansteuern des ersten Magnetventils die Parkbremse des Nutzfahrzeugs gelöst wird.

In besonders nützlicher Weise ist es vorgesehen, dass ein zweites Magnetventil ein monostabiles 3/2-Wege-Ventil ist. Hiermit ist es möglich, die erste Steuerleitung zum zweiten Anschluss und zu einem ersten Magnetventil entweder mit der Druckluftquelle oder mit der Entlüftung zu verbinden. Außerdem ist nach jedem stromlosen Zustand der aktuelle Schaltzustand des zweiten Magnetventils immer eindeutig durch dessen Ruhezustand definiert, in den das Ventil zurückfällt, wenn keine Schaltspannung anliegt. Wird ein im Ruhezustand geöffnetes Ventil verwendet, das im Ruhezustand die erste Steuerleitung mit der Druckluftquelle verbindet, kann sichergestellt werden, dass ein mit dem zweiten Anschluss verbundener Anhänger nicht gebremst wird.

Bei einer bevorzugten Ausführungsform ist vorgesehen, dass die Anschlüsse und eine Verbindung zur Parkbremse des Nutzfahrzeugs stufbar mit einem Druck beaufschlagt werden können. Durch permanentes Wechseln zwischen einer Verbindung mit der Druckluftzufuhr und einer Entlüftung wird ein schrittweise abgestufter/erhöhter bzw. abgestufter/reduzierter Druck eingestellt. Wird diese stufbare Druckregulierung über ein Schalten des zweiten Magnetventils umgesetzt, lässt sich die Höhe und der Gradient des Drucks an den Anschlüssen über das Verhältnis von an- zu abgeschaltetem Zustand des Ventils beeinflussen.

Nützlicherweise ist für eine erfindungsgemäße Parkbremsventilanordnung vorgesehen, dass sie einen Drucksensor und eine elektronische Steuereinheit umfasst, wobei die elektronische Steuereinheit Signale des Drucksensors empfängt und elektrische Signale zum Ansteuern der Magnetventile ausgibt. Mit einem Drucksensor kann am Ausgang des Relaisventils der dort anliegende Druck erfasst werden. Die elektronische Steuereinheit kann das Messsignal verarbeiten und die Informationen über den Betriebszustand der Parkbremse verarbeiten. Diese können, zum Beispiel über ein Kommunikationsnetzwerk des Fahrzeugs, beispielsweise ein CAN, mit dem die elektronische Steuereinheit mit anderen Steuergeräten im Fahrzeug kommunizieren kann, an ein Dashboard im Fahrerhaus weitergeleitet werden. Weiterhin dient die elektronische Steuereinheit dazu, die Magnetventile anzusteuern. So wird das Messsignal der Druckmessung am Ausgang des Relaisventils beispielsweise dazu verwendet, in einem Zustand des stufbaren Bremsens den abgestuften Druck zu messen. Dieser wird von der elektronischen Steuereinheit aufbereitet und zur Regelung des zweiten Magnetventils verwendet.

Eine bevorzugte Ausführungsform der Erfindung sieht vor, dass sie in eine elektronische Luftaufbereitungseinheit integriert ist. Dies ermöglicht eine kostengünstige Implementation der elektronischen Steuerkomponenten und einen energiesparenden Betrieb des pneumatischen Systems.

Nützlicherweise ist für eine erfindungsgemäße Parkbremsventilanordnung vorgesehen, dass sie dazu ausgelegt ist, bei jedem Parkvorgang automatisch die Funktionsfähigkeit der Parkbremse des Nutzfahrzeugs festzustellen. Nach ECE-R13, Absatz 5.1.2.3 ist vorgeschrieben, dass ein Fahrzeugführer eines Nutzfahrzeugs in der Lage sein muss, sich jederzeit darüber zu vergewissern, dass die Wirkung der Feststellbremse, also der Parkbremse, der Fahrzeugkombination, die ausschließlich durch das mechanisch wirkende Feststellbremssystem erreicht wird, ausreichend ist. Es ist aber nicht ausdrücklich vorgeschrieben, dass dies auch wirklich jedes Mal durchführt. Bei dem automatischen Trailer-Test mit der erfindungsgemäßen Parkbremsventilanordnung wird geprüft, ob die Parkbremse des Zugfahzeugs die Kombination aus Zugfahrzeug und Anhänger halten kann und der Fahrer über das Testergebnis sofort eine Mitteilung erhält. Außerdem ist erfindungsgemäß vorgesehen, dass die zuletzt festgestellte Funktionsfähigkeit der Parkbremse jederzeit ausgegeben werden kann. Der Fahrer wird nicht nur automatisch bei oder direkt nach der Durchführung eines Trailer-Tests über das Ergebnis informiert, sondern kann sich jederzeit über das Ergebnis des zuletzt durchgeführten Tests informieren. Hierzu kann zum Beispiel ein "Trailer-Test"-Knopf vorgesehen sein, mit dem der Fahrer die Information anfordern kann. Die zuletzt festgestellte Funktionsfähigkeit der Parkbremse wird über ein optisches oder akustisches Signal ausgegeben. Auf diese Weise kann dem Fahrer die unter Umständen sicherheitskritische Information auf eine schnell erfassbare Weise zur Verfügung gestellt werden. Der Vorgang des Feststellens der Funktionsfähigkeit der Parkbremse kann jederzeit abgebrochen werden kann. So kann insbesondere, wenn ein rollendes Fahrzeug erkannt wird, sofort reagiert werden, um diesen sicherheitskritischen Zustand zu beenden. Nach einem Abbruch wegen unzureichender Bremswirkung der Parkbremse des Nutzfahrzeugs bremst der Anhänger mit, so dass auf diese Weise umgehend wieder ein sicherer Betriebszustand hergestellt werden kann.

Die Erfindung wird nun mit Bezug auf die begleitenden Zeichnungen anhand bevorzugter Ausführungsformen beispielhaft erläutert.

Es zeigen:
- Figur 1: eine schematische Darstellung eines Nutzfahrzeugs mit einem Bremssystem, das eine erfindungsgemäße Parkbremsventilanordnung umfasst;
- Figur 2: eine schematische Darstellung einer erfindungsgemäßen Parkbremsventilanordnung;
- Figur 3: eine schematische Darstellung einer erfindungsgemäßen Parkbremsventilanordnung im Betriebszustand "Fahren";
- Figur 4: eine schematische Darstellung einer erfindungsgemäßen Parkbremsventilanordnung im Betriebszustand "Trailer-Test";
- Figur 5: eine schematische Darstellung einer erfindungsgemäßen Parkbremsventilanordnung in einem ersten Betriebszustand "Parken";
- Figur 6: eine schematische Darstellung einer erfindungsgemäßen Parkbremsventilanordnung in einem zweiten Betriebszustand "Parken";
- Figur 7: eine schematische Darstellung einer erfindungsgemäßen Parkbremsventilanordnung im Betriebszustand "stufbares Bremsen";

Bei der nachfolgenden Beschreibung der Zeichnungen bezeichnen gleiche Bezugszeichen gleiche oder vergleichbare Komponenten.

Eine durchgezogene pneumatische Verbindungslinie symbolisiert dabei eine unter einem erhöhten Druck stehende pneumatische Verbindung, eine mit längeren Strichen gestrichelt gezeichnete Linie eine nicht unter erhöhtem Druck stehende Verbindung, eine gepunktete Linie eine Verbindung, bei der aufgrund eines permanenten Wechsels zwischen Be- und Entlüftung sich die Druckverhältnisse stufbar ändern.

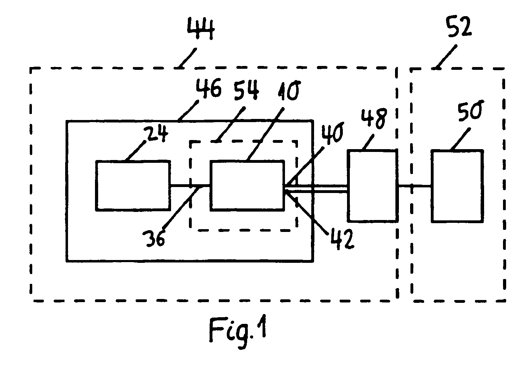

Figur 1 zeigt eine schematische Darstellung eines Nutzfahrzeugs 44 mit einem Bremssystem 46, das eine erfindungsgemäße Parkbremsventilanordnung 10 umfasst, die in eine elektronische Luftaufbereitungseinheit 54 integriert ist und die eine pneumatische Verbindung 36 zu den Parkbremsen 24 des Nutzfahrzeugs und zwei Anschlüsse 40, 42 zu einer Anhängersteuerventilanordnung 48 aufweist, die mit den Parkbremsen 50 eines Anhängers 52 verbunden ist, wobei der eine Anschluss 42 dafür vorgesehen ist, dass er verwendet wird, wenn der Anhänger 52 bei eingelegter Parkbremse 24 des Nutzfahrzeugs 44 nicht gebremst werden soll, und der andere Anschluss 40 verwendet wird, wenn der Anhänger 52 bei eingelegter Parkbremse 24 des Nutzfahrzeugs 44 gebremst werden soll. Der jeweils nicht benötigte Anschluss wird verschlossen.

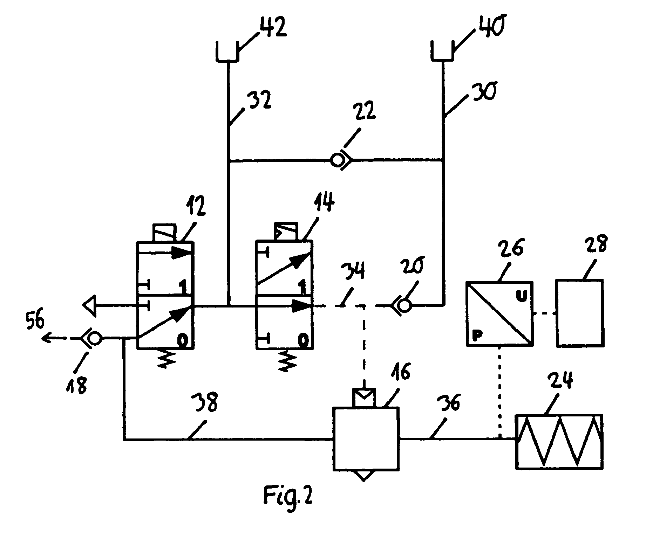

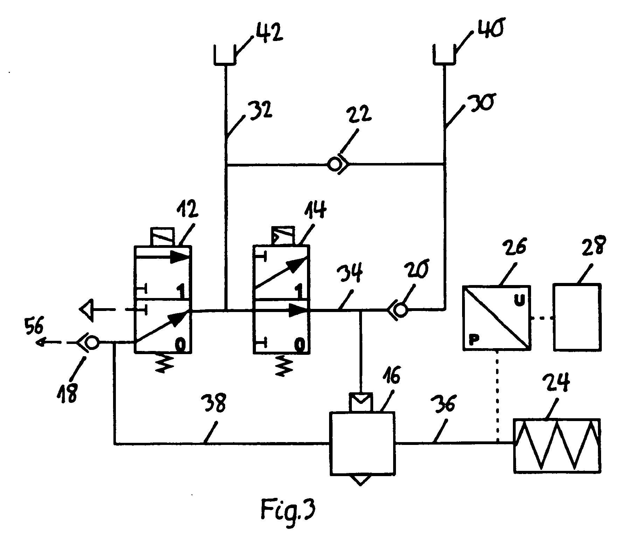

Figur 2 zeigt eine schematische Darstellung einer Ausführungsform für eine erfindungsgemäße Parkbremsventilanordnung 10, die ein bistabiles erstes 3/2-Wege-Magnetventil 14 zur Steuerung eines Parkbrems-Relaisventils 16 verwendet, mit dem die erste pneumatische Verbindung 36 zu den Nutzfahrzeug-Parkbremsen 24 mit einem Druck beaufschlagt werden können. Der Steuereingang des Relaisventils 16 ist über eine dritte Steuerleitung 34 mit dem Ausgang des bistabilen ersten 3/2-Wege-Magnetventils 14 verbunden ist. In einem Schaltzustand "0" ist ein Eingang des ersten Magnetventils 14 über eine erste Steuerleitung 32 mit dem zweiten Anschluss 42 und dem Ausgang eines im stromlosen Zustand "0" geöffneten monostabilen zweiten 3/2-Wege-Magnetventils 12 verbunden, über das die erste Steuerleitung 32 in einem Schaltzustand "0" über das dritte Rückschlagventil 18 und eine zweite pneumatische Verbindung 38 mit Druckluft beaufschlagt wird. In einem Schaltzustand "1" entlüftet das erste 3/2-Wege-Magnetventil 14 die dritte Steuerleitung 34. Im Schaltzustand "1" des zweiten 3/2-Wege-Magnetventils 12 wird die erste Steuerleitung 32 von der zweiten pneumatischen Verbindung 38 getrennt und entlüftet. Über die zweite pneumatische Verbindung 38 wird außerdem, sofern das Parkbrems-Relaisventil 16 auf Durchlass geschaltet ist, die erste pneumatische Verbindung 36 mit Druckluft versorgt, so dass die Parkbremse 24 gelöst wird. Die erste Steuerleitung 32 ist außerdem mit einem zweiten Rückschlagventil 22 verbunden, über das die zweite Steuerleitung 30 bei entlüfteter erster Steuerleitung 32 entlüftet werden kann. Über das erste Rückschlagventil 20 kann die zweite Steuerleitung 30 und damit der erste Anschluss 40 über die dritte Steuerleitung 34 mit Druckluft versorgt werden. Zusätzlich ist ein Drucksensor 26 vorgesehen, der den Druck in der ersten pneumatischen Verbindung 36 misst und die Messwerte an eine elektronische Steuereinheit 28 weiterleitet. Diese verarbeitet das Messsignal und gewinnt so Informationen über den Betriebszustand der Parkbremse 24. Diese können dann über ein Kommunikationsnetzwerk des Fahrzeugs, beispielsweise ein CAN, mit dem die elektronische Steuereinheit 28 mit anderen Steuergeräten im Fahrzeug kommunizieren kann, an ein Dashboard im Fahrerhaus weitergeleitet werden. Außerdem steuert die elektronische Steuereinheit 28 die Schaltzustände der Magnetventile 12, 14, wodurch verschiedene Betriebszustände der Parkbremsventilanordnung 10 realisiert werden, die anhand der Figuren 3 bis 7 erläutert werden und in der Tabelle 1 zusammengefasst sind:

**Tabelle 1, Schaltzustände der Magnetventile 12, 14**

| **Betriebszustand** | **Magnetventil 12** | **Magnetventil 14** |
|---|---|---|
| Fahren | 0 | 0 |
| Parken 1 | 1->0 | 1 |
| Parken 2 | 0 | 1 |
| Trailer-Test | 0 | 1 |
| Stufbare Druckveränderung | 1..0 | 0 |

Figur 3 zeigt eine Parkbremsventilanordnung entsprechend Figur 2, die sich in einem Betriebszustand "Fahren" befindet. Über das dritte Rückschlagventil 18 wird das monostabile zweite Magnetventil 12 und der Eingang des Parkbrems-Relaisventils 16 mit einem Druck beaufschlagt. Im stromlosen Schaltzustand "0" wird dadurch die erste Steuerleitung 32 und damit der zweite Anschluss 42 mit einem Druck beaufschlagt. Über diesen werden Anhänger 52 bedient, die in Parkstellung nicht mit dem Nutzfahrzeug 44 mitbremsen sollen. Das zweite Rückschlagventil 22 verhindert, dass Druckluft aus der ersten Steuerleitung 32 auf diesem Weg zur zweiten Steuerleitung 30 übertritt. Das bistabile erste Magnetventil 14 befindet sich im Schaltzustand "0", in dem es den Druck durchleitet in die dritte Steuerleitung 34 und damit zum Steuereingang des Relaisventils 16 und zum ersten Rückschlagventil 20. Über das ersten Rückschlagventil 20 wird die zweite Steuerleitung 30 und damit der erste Anschluss 40 mit Druck beaufschlagt. Über diesen werden Anhänger 52 bedient, die in Parkstellung mit dem Nutzfahrzeug 44 mitbremsen sollen. Am Parkbrems-Relaisventil 16 wird der am Eingang anliegende Druck aufgrund des am Steuereingang anliegenden Steuerdrucks zu den Federspeichern der Parkbremse 24 ausgesteuert, diese wird gelöst und das Fahrzeug kann bewegt werden. Da sowohl der erste Anschluss 40, als auch der zweite Anschluss 42 mit Druck beaufschlagt sind, können beide Varianten von Anhängern mit dem Zugfahrzeug bewegt werden. Ein Drucksensor 26 misst in der ersten pneumatischen Verbindung 36 am Ausgang des Relaisventils 16 den Druck. Diese Information wird von der elektronischen Steuereinheit 28 aufbereitet und über ein CAN-Netzwerk des Fahrzeugs an das Dashboard im Fahrerhaus weitergeleitet. Ein ausreichend hoher gemessener Druck bedeutet auch, dass die Parkbremse gelöst ist. Das sogenannte FailSafe-Verhalten, also das Verhalten der Anordnung bei Ausfall der Spannungsversorgung besteht im Betriebszustand "Fahren" darin, dass der Fahrzustand erhalten bleibt, Da die beiden Magnetventile 12, 14 jeweils auch im stromlosen Zustand in den aktuellen Schaltzustanden "0" verbleiben.

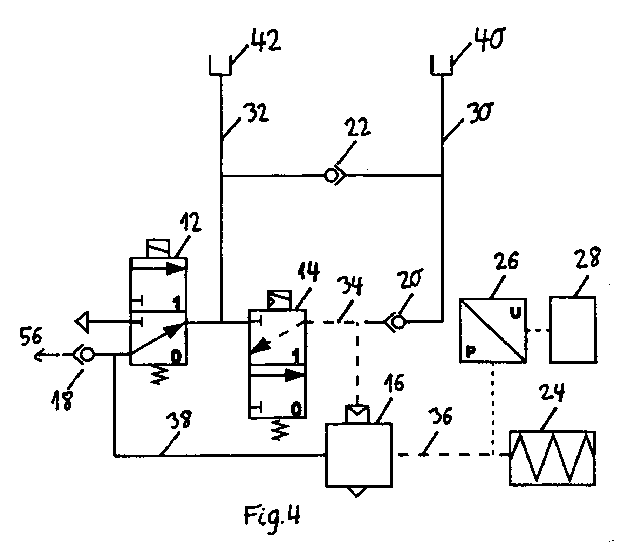

Figur 4 zeigt eine Parkbremsventilanordnung entsprechend Figur 2, die sich in einem Betriebszustand "Traiter-Test" befindet. In diesem Zustand verbleibt das zweite Magnetventil 12 im Schaltzustand "0" und leitet den Druck weiter zum zweiten Anschluss 42. Das erste Magnetventil 14 wird in die Schaltstellung "1" geschaltet, so dass die dritte Steuerleitung 34 nicht mehr mit der ersten Steuerleitung 32 verbunden ist, so dass die dritte Steuerleitung 34 über das erste Magnetventil 14 entlüftet wird und kein Steuerdruck mehr am Steuereingang des Relaisventils 16 anliegt. Im Relaisventil 16 werden Ausgang und Entlüftung miteinander verbunden, die Federspeicher 24 entlüftet und das Fahrzeug gebremst. Da das erste Rückschlagventil 20 aber eine Entlüftung der zweiten Steuerleitung 30 verhindert, bleibt der Druck am ersten Anschluss 40 erhalten, so dass auch ein Anhänger, der im Parkzustand mitbremsen soll, im Betriebszustand "Trailer-Test" nicht gebremst wird. Bei gelöster Anhängerbremse wird so getestet, ob alleine das Zugfahrzeug 44 das Gespann aus Zugfahrzeug 44 und Anhänger 52 halten kann.

Die Fahrzeugbewegung kann nun zum Beispiel über die Fahrzeuggeschwindigkeit oder Rad-Drehzahlsensoren erfasst werden und über eine geeignete Steuerelektronik 28 eingelesen und beurteilt werden. Darauf kann dem Fahrer über eine Anzeigetafel eine Mitteilung angezeigt oder ein akustisches Warnsignal ausgegeben werden, wenn der Zustand instabil ist. Dem Fahrer steht weiter ein Testknopf zur Verfügung, mit dem er jederzeit das zuletzt festgestellte Testergebnis erneut ausgeben lassen kann.

Das FailSafe-Verhalten im Betriebszustand Trailer-Test bei Ausfall der Spannungsversorgung ist dadurch gegeben, dass das Fahrzeug, falls das erste Magnetventil 14 bereits seinen Schaltvorgang abgeschlossen hat, den gewünschten gebremsten Endzustand erreicht. Wird der Schaltvorgang nicht abgeschlossen, bleibt das Fahrzeug im ungebremsten Fahrzustand.

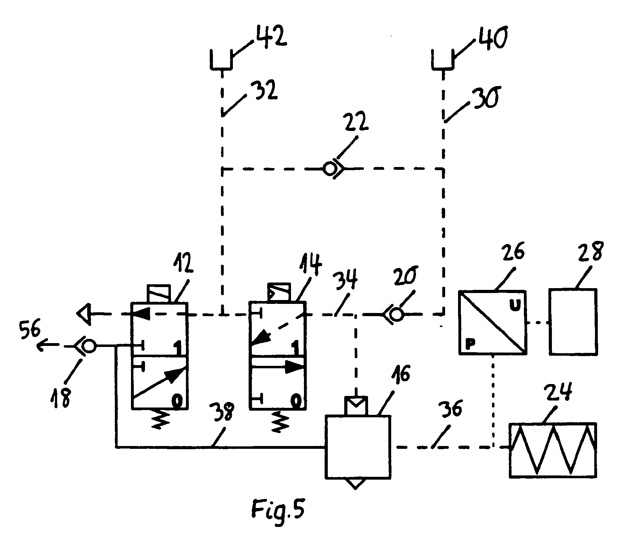

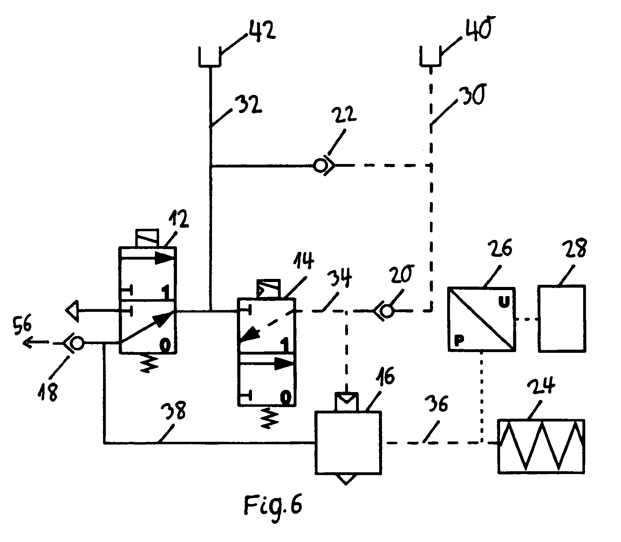

Figur 5 und Figur 6 zeigen eine Parkbremsventilanordnung entsprechend Figur 2, die sich zuerst in einem ersten, dann in einem zweiten Betriebszustand "Parken" befindet. In Figur 5 wird das zweite Magnetventil 12 in den Schaltzustand "1" geschaltet und die erste Steuerleitung 32 nicht mit Druckluft versorgt wird, sondern über das zweite Magnetventil 12 entlüftet wird. Damit wird auch der zweite Anschluss 42 nicht mehr mit Druck beaufschlagt. Über das zweite Rückschlagventil 22 baut sich nun der Druck auch am ersten Anschluss 40 ab. Über das erste Magnetventil 14 in Schaltstellung "1" wird der Steuereingang des Relaisventils 16 entlüftet, so dass die Federspeicher-Parkbremsen 24 entlüftet werden und das Fahrzeug nicht mehr bewegt werden kann. Der Sensor 26 misst in diesem Zustand keinen Druck. Diese Information wird von der elektronischen Steuereinheit 28 aufbereitet und zum Beispiel über ein CAN-Netzwerk des Fahrzeugs an das Dashboard im Fahrerhaus weitergeleitet. Wenn kein Druck gemessen wird, bedeutet dies, dass die Parkbremse 24 eingelegt ist. Dann wird das zweite Magnetventil 12 wieder in den stromlosen Schaltzustand "0" versetzt, in dem es Druckluft in die erste Steuerleitung 32 und damit zum zweiten Anschluss 42 leitet.

In Figur 6 ist der sich damit einstellende zweite Parkbetriebszustand dargestellt. Das zweite Rückschlagventil 22 sperrt die zweite Steuerleitung 30 und damit den ersten Anschluss 40 gegen die erste Steuerleitung 32 ab, so dass ein mit dem ersten Anschluss 40 verbundener Anhänger 52 gebremst wird, ein mit dem zweiten Anschluss 42 verbundener Anhänger 52 nicht. Für das FailSafe-Verhalten bei Ausfall der Spannungsversorgung während des Parkvorgangs gilt, dass, wenn der Schaltvorgang des zweiten Magnetventils 12 nicht zum Abschluss kommt, das Fahrzeug im Zustand wie nach der Trailer-Test-Funktion verbleibt. Wird der Schaltvorgang abgeschlossen, wird der gewünschte Endzustand erreicht. Es kann also keine sicherheitskritische Situation entstehen.

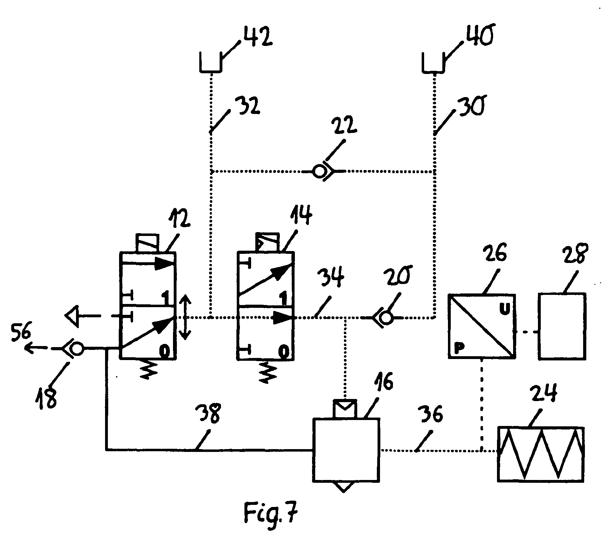

Figur 7 zeigt eine Parkbremsventilanordnung entsprechend Figur 2, die sich in einem Betriebszustand "stufbares Bremsen", also einer stufbaren Druckveränderung, befindet. In diesem Zustand wird das zweite Magnetventil 12 durch permanentes An- und Abschalten und damit dem permanenten Zu- und Wegschalten von Druckluftversorgung 56 und Entlüftung in einen Zustand versetzt, der in der ersten Steuerleitung 32 ein abgestufter/reduzierter Druck einstellt, wobei die Höhe des Druckes über das Verhältnis von an- zu abgeschaltetem Zustand des Ventils 12 beeinflusst werden kann. Dieser Druck stellt sich auch am zweiten Anschluss 42 und am Eingang des ersten Magnetventils 14 ein. Da das erste Magnetventil 14 im Schaltzustand "0" bleibt, wird auch der Druck am Steuereingang des Relaisventils 16 abgestuft reduziert und somit auch der Druck auf die Federspeicher-Parkbremsen 24 des Nutzfahrzeugs 44. Über das zweite Rückschlagventil 22 wird auch in der zweiten Steuerleitung 30 und damit am ersten Anschluss 40 der Druck gestuft reduziert. Da an beiden Anschlüssen 40, 42 der Druck reduziert wird, wird ein Anhänger 52, der mit einem der Anschlüsse verbunden ist, gestuft gebremst. Soll der Druck am Eingang des Parkbrems-Relaisventils 16 erhöht werden, wird dies über eine Veränderung des Verhältnisses der Zeitanteile für die Schaltzustände des zweiten Magnetventils 12 erreicht. Das FailSafe-Verhalten bei Ausfall der Spannungsversorgung ist im Betriebszustand "stufbares Bremsen" dadurch gegeben, dass das zweite Magnetventil 12 in seinen Ruhezustand "0" fällt, so dass das Fahrzeug im Fahrzustand bleibt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Parkbremsventilanordnung
- 12: 3/2-Wege-Magnetventil
- 14: 3/2-Wege-Magnetventil
- 16: Parkbrems-Relaisventil
- 18: Rückschlagventil
- 20: Rückschlagventil
- 22: Rückschlagventil
- 24: Parkbremsen des Nutzfahrzeugs
- 26: Drucksensor
- 28: elektronische Steuereinheit
- 30: pneumatische Steuerleitung
- 32: pneumatische Steuerleitung
- 34: pneumatische Steuerleitung
- 36: pneumatische Verbindung
- 38: pneumatische Verbindung
- 40: pneumatischer Anschluss
- 42: pneumatischer Anschluss
- 44: Nutzfahrzeug
- 46: Bremssystem
- 48: Anhängersteuerventilanordnung
- 50: Parkbremsen eines Anhängers
- 52: Anhänger
- 54: elektronische Luftaufbereitungseinheit
- 56: Druckluftversorgung

## Patentansprüche

1. Elektrisch gesteuerte Parkbremsventilanordnung (10) für ein Bremssystem (46) eines Nutzfahrzeuges (44), wobei die Parkbremsventilanordnung (10) zwei Anschlüsse (40, 42) aufweist, von denen ein Anschluss (40) dazu vorgesehen ist, eine Anhängersteuerventilanordnung (48) so mit Druck zu beaufschlagen, dass der Anhänger (52) im Parkbremsbetrieb des Nutzfahrzeugs mitbremst, während der andere Anschluss (42) dazu vorgesehen ist, die Anhängersteuerventilanordnung so mit Druck zu beaufschlagen, dass der Anhänger im Parkbremsbetrieb des Nutzfahrzeugs nicht mitbremst, **dadurch gekennzeichnet, dass** die elektrisch gesteuerte Parkbremsventilanordnung höchstens zwei Magnetventile (12, 14) umfasst, insbesondere ein erstes Magnetventil (14) und ein zweites Magnetventil (12).

2. Parkbremsventilanordnung nach Anspruch 1, **dadurch gekennzeichnet, dass** bei einem Ausbleiben einer Ansteuerung der Magnetventile (12, 14) die Parkbremsventilanordnung (10) im zuletzt eingestellten Betriebszustand verbleibt.

3. Parkbremsventilanordnung nach einem der vorhergehenden Ansprüche, **dadurch gekennzeichnet, dass** ohne Ansteuerung des ersten Magnetventils (14) nicht in einen Fahrbetriebszustand gewechselt werden kann.

4. Parkbremsventilanordnung nach einem der vorhergehenden Ansprüche, **dadurch gekennzeichnet, dass** sie ein Relaisventil (16) zum Ansteuern der Parkbremsen (24) des Nutzfahrzeugs (44) umfasst, wobei ein Steuereingang des Relaisventils (16) mit einem Ausgang des ersten Magnetventils (14) verbunden ist und ein Eingang des ersten Magnetventils (14) über eine erste Steuerleitung (32) mit dem zweiten Anschluss (42) und einem Ausgang des zweiten Magnetventils (12) verbunden ist, über das die erste Steuerleitung (32) mit einem Druck beaufschlagt werden kann.

5. Parkbremsventilanordnung nach Anspruch 4, **dadurch gekennzeichnet, dass** die erste Steuerleitung (32) über das zweite Magnetventil (12) entlüftet werden kann.

6. Parkbremsventilanordnung nach einem der Ansprüche 4 oder 5, **dadurch gekennzeichnet, dass** der Steuereingang des Relaisventils (16) über ein erstes Rückschlagventil (20) und eine zweite Steuerleitung (30) mit dem ersten Anschluss (40) verbunden ist.

7. Parkbremsventilanordnung nach Anspruch 6, **dadurch gekennzeichnet, dass** die zweite Steuerleitung (30) über ein zweites Rückschlagventil (22) mit der ersten Steuerleitung (32) verbunden ist.

8. Parkbremsventilanordnung nach einem der vorhergehenden Ansprüche, **dadurch gekennzeichnet, dass** das erste Magnetventil (14) ein bistabiles 3/2-Wege-Ventil ist.

9. Parkbremsventilanordnung nach einem der vorhergehenden Ansprüche, **dadurch gekennzeichnet, dass** das zweite Magnetventil (12) ein monostabiles 3/2-Wege-Ventil ist.

10. Parkbremsventilanordnung nach einem der vorhergehenden Ansprüche, **dadurch gekennzeichnet, dass** die Anschlüsse (40, 42) und eine Verbindung (36) zur Parkbremse (24) des Nutzfahrzeugs (44) stufbar mit einem Druck beaufschlagt werden können.

11. Parkbremsventilanordnung nach einem der vorhergehenden Ansprüche, **dadurch gekennzeichnet, dass** sie einen Drucksensor (26) und eine elektronische Steuereinheit (28) umfasst, wobei die elektronische Steuereinheit (28) Signale des Drucksensors (26) empfängt und elektrische Signale zum Ansteuern der Magnetventile (12, 14) ausgibt.

12. Parkbremsventilanordnung nach einem der vorhergehenden Ansprüche, **dadurch gekennzeichnet, dass** sie in eine elektronische Luftaufbereitungseinheit (54) integriert ist.

13. Parkbremsventilanordnung nach einem der vorhergehenden Ansprüche, **dadurch gekennzeichnet, dass** sie dazu ausgelegt ist, bei jedem Parkvorgang automatisch die Funktionsfähigkeit der Parkbremse (24) des Nutzfahrzeugs (44) festzustellen.

## Claims

1. Electrically controlled parking brake valve assembly (10) for a brake system (46) of a commercial vehicle (44), wherein the parking brake valve assembly (10) comprises two connectors (40, 42) of which one connector (40) is intended for pressurising a trailer control valve assembly (48) in such a way that said trailer (52) will be braked in parallel in the parking brake mode of the commercial vehicle, whilst said other connector (42) is envisaged for pressurising said trailer control valve assembly in such a way that said trailer will not be braked in parallel in the parking brake mode of said commercial vehicle, **characterised in that** said electrically controlled parking brake valve assembly comprises two solenoid valves (12, 14) at maximum, in particular one first solenoid valve (14) and a second solenoid valve (12)

2. Parking brake valve assembly according to Claim 1, **characterised in that** when there is no control of said solenoid valves (12, 14) said parking brake valve assembly (10) remains in the operating mode set last.

3. Parking brake valve assembly according to any of the preceding Claims, **characterised in that** a change over into a driving operating mode is not possible without control of said first solenoid valve (14).

4. Parking brake valve assembly according to any of the preceding Claims, **characterised in that** it comprises a relay valve (16) for controlling the parking brakes (24) of said commercial vehicle (44), with a control input of said relay valve (16) being connected to an output of said first solenoid valve (14) and with a input of said first solenoid valve (14) being connected via a first control line (32) to said second connector (42) and an output of said second solenoid valve (12), via which said first control line (32) can be pressurised.

5. Parking brake valve assembly according to Claim 4, **characterised in that** said first control line (32) is adapted to be vented via said second solenoid valve (12).

6. Parking brake valve assembly according to any of the Claims 4 or 5, **characterised in that** the control input of said relay valve (16) is connected via a first non-return valve (20) and a second control line (30) to said first connector (40).

7. Parking brake valve assembly according to Claim 6, **characterised in that** said second control line (30) is connected to said first control line (32) via a second non-return valve (22).

8. Parking brake valve assembly according to any of the preceding Claims, **characterised in that** said first solenoid valve (14) is a bi-stable 3/2-way valve.

9. Parking brake valve assembly according to any of the preceding Claims, **characterised in that** said second solenoid valve (12) is a mono-stable 3/2-way valve.

10. Parking brake valve assembly according to any of the preceding Claims, **characterised in that** said connectors (40, 42) and a connection (36) with the parking brake (24) of said commercial vehicle (44) can be pressurised in adjustable graduations.

11. Parking brake valve assembly according to any of the preceding Claims, **characterised in that** it comprises a pressure sensor (26) and an electronic control unit (28), with said electronic control unit (28) receiving signals from said pressure sensor (26) and issuing electrical signals for control of said solenoid valves (12, 14).

12. Parking brake valve assembly according to any of the preceding Claims, **characterised in that** it is integrated into an electronic air processing unit (54).

13. Parking brake valve assembly according to any of the preceding Claims, **characterised in that** it is designed for establishing automatically the functional integrity of the parking brake (24) of said commercial vehicle (44) by the time of each parking operation.

## Revendications

1. Agencement (10) de vanne de frein de stationnement à commande électrique pour un système (46) de freinage d'un véhicule (44) utilitaire, dans lequel l'agencement (10) de vanne de frein de stationnement a deux raccord (40, 42), dont l'un (40) est prévu pour alimenter en pression un agencement (48) de vanne de commande de remorque, de manière à ce que la remorque (52) freine dans le fonctionnement de frein de stationnement du véhicule utilitaire, tandis que l'autre raccord (42) est prévu pour alimenter en pression l'agencement de vanne de commande de remorque, de manière à ce que la remorque ne freine pas dans le fonctionnement en frein de stationnement du véhicule utilitaire, **caractérisé en ce que** l'agencement de vanne de frein de stationnement à commande électrique comprend au plus deux électrovannes (12, 14), notamment une première électrovanne (14) et une deuxième électrovanne (12).

2. Agencement de vanne de frein de stationnement suivant la revendication 1, **caractérisé en ce que**, si les électrovannes (12, 14) ne sont pas commandées, l'agencement (10) de vanne de frein de stationnement reste dans l'état de fonctionnement établi en dernier.

3. Agencement de vanne de frein de stationnement suivant l'une des revendications précédentes, **caractérisé en ce que**, sans commande de la première électrovanne (14), on ne passe pas dans un état de fonctionnement en marche.

4. Agencement de vanne de frein de stationnement suivant l'une des revendications précédentes, **caractérisé en ce qu'**il comprend une vanne (16) relais pour la commande du frein (24) de stationnement du véhicule (44) utilitaire, une entrée de commande de la vanne (16) relais étant reliée à une sortie de la première électrovanne (14) et une entrée de la première électrovanne (14) étant reliée par un premier conduit (32) de commande au deuxième raccord (42) et à une sortie de la deuxième électrovanne (12), par laquelle le premier conduit (32) de commande peut être alimenté en une pression.

5. Agencement de vanne de frein de stationnement suivant la revendication 4, **caractérisé en ce que** le premier conduit (32) de commande peut être mis à l'atmosphère par la deuxième électrovanne (12).

6. Agencement de vanne de frein de stationnement suivant l'une des revendications 4 ou 5, **caractérisé en ce que** l'entrée de commande de la vanne (16) relais est reliée au premier raccord (40) par un premier clapet antiretour (20) et par un deuxième conduit (30) de commande.

7. Agencement de vanne de frein de stationnement suivant la revendication 6, **caractérisé en ce que** le deuxième conduit (30) de commande est relié au premier conduit (32) de commande par un deuxième clapet (22) antiretour.

8. Agencement de vanne de frein de stationnement suivant l'une des revendications précédentes, **caractérisé en ce que** la première électrovanne (14) est une vanne bistable à 3/2 voies.

9. Agencement de vanne de frein de stationnement suivant l'une des revendications précédentes, **caractérisé en ce que** la deuxième électrovanne (12) est une vanne monostable à 3/2 voies.

10. Agencement de vanne de frein de stationnement suivant l'une des revendications précédentes, **caractérisé en ce que** les raccords (40, 42) et une liaison (36) allant vers le frein (24) de stationnement du véhicule (44) utilitaire peuvent être alimentés par palier en une pression.

11. Agencement de vanne de frein de stationnement suivant l'une des revendications précédentes, **caractérisé en ce qu'**il comprend un capteur (26) de pression et une unité (28) électronique de commande, l'unité (28) électronique de commande recevant des signaux du capteur (26) de pression et émettant des signaux électriques de commande des électrovannes (12, 14).

12. Agencement de vanne de frein de stationnement suivant l'une des revendications précédentes, **caractérisé en ce qu'**il est intégré dans une unité (54) électronique de préparation d'air.

13. Agencement de vanne de frein de stationnement suivant l'une des revendications précédentes, **caractérisé en ce qu'**il est conçu pour constater, dans chaque opération de stationnement, automatiquement l'aptitude à fonctionner du frein (24) de stationnement du véhicule (44) utilitaire.
